# EUROPEAN PATENT APPLICATION

(11) **EP 4 665 065 A1**
(43) Date of publication of application: **17.12.2025**
(21) Application number: 23921265.7
(22) Date of filing: 05.10.2023
(51) Int. Cl.: H04W 74/08, H04W 8/22, H04W 48/08, H04W 48/16, H04W 72/04

(54) **TERMINAL, BASE STATION, AND COMMUNICATION METHOD**

(30) Priority: 10.02.2023 JP 2023019121
(71) Applicant: Panasonic Intellectual Property Corporation of America, Torrance, CA 90504 (US)
(72) Inventor: MAKI, Shotaro, Kadoma-shi, Osaka 571-0057 (JP); SUZUKI, Hidetoshi, Kadoma-shi, Osaka 571-0057 (JP)
(74) Representative: Grünecker Patent- und Rechtsanwälte PartG mbB
(86) International application number: PCT/JP2023/036358
(87) International publication number: WO 2024/166440

(57) **Abstract**

A terminal including: a reception circuit that receives information which is directed to a terminal of a first number of types and relates to a second number of settings for a random access signal, the second number being smaller than the first number; and a transmission circuit that transmits the random access signals on the basis of the information.

## Description

### Technical Field

The present disclosure relates to a terminal, a base station, and a communication method.

### Background Art

A communication system called the 5th generation mobile communication system (5G) has been studied. The 3rd Generation Partnership Project (3GPP), which is an international standards-developing organization, has been studying development of the 5G communication system in terms of both the development of LTE/LTE-Advanced systems and a New Radio Access Technology (also referred to as New RAT or NR), which is a new method not necessarily backward compatible with the LTE/LTE-Advanced systems (see, e.g., Non Patent Literature (hereinafter referred to as "NPL") 1).

### Citation List

### Non-Patent Literature

NPL 1
   RP-181726, "Revised WID on New Radio Access Technology," NTT DOCOMO, September 2018
NPL 2
   RP-213661, "New SID on Study on further NR RedCap UE complexity reduction," Ericsson, December 2021

### Summary of Invention

There is room for study in a transmission method for a random access signal.

One non-limiting and exemplary embodiment of the present disclosure facilitates providing a terminal, a base station, and a communication method capable of appropriately transmitting a random access signal.

A terminal according to one exemplary embodiment of the present disclosure includes: reception circuitry, which, in operation, receives information on a second number of configurations of a random access signal for a terminal of a first number of types, the second number being less than the first number; and transmission circuitry, which, in operation, transmits the random access signal based on the information.

It should be noted that general or specific embodiments may be implemented as a system, an apparatus, a method, an integrated circuit, a computer program, a storage medium, or any selective combination thereof.

According to one exemplary embodiment of the present disclosure, it is possible to appropriately transmit a random access signal.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an example of Physical Random Access Channel (PRACH) configurations;
FIG. 2 is a block diagram showing an exemplary configuration of a part of a base station;
FIG. 3 is a block diagram showing an exemplary configuration of a part of a terminal;
FIG. 4 is a block diagram showing an exemplary configuration of the base station;
FIG. 5 is a block diagram showing an exemplary configuration of the terminal;
FIG. 6 illustrates an exemplary operation of the base station and the terminal;
FIG. 7 illustrates an example of the PRACH configurations;
FIG. 8 illustrates an example of the PRACH configurations;
FIG. 9 illustrates an exemplary operation of the base station and the terminal;
FIG. 10 illustrates an example of the PRACH configurations;
FIG. 11 illustrates an example of a relationship between a terminal type and the PRACH configurations;
FIG. 12 illustrates an example of the PRACH configurations;
FIG. 13 illustrates an example of a relationship between the terminal type and the PRACH configurations;
FIG. 14 illustrates an example of a relationship between the PRACH configurations and a preamble index;
FIG. 15 illustrates an example of parameters in the PRACH configurations;
FIG. 16 illustrates an example of the PRACH configurations;
FIG. 17 illustrates an exemplary architecture of a 3GPP NR system;
FIG. 18 schematically illustrates functional split between NG-RAN and 5GC;
FIG. 19 is a sequence diagram of a Radio Resource Control (RRC) connection setup/reconfiguration procedure;
FIG. 20 is a schematic diagram illustrating usage scenarios of enhanced Mobile BroadBand (eMBB), massive Machine Type Communications (mMTC), and Ultra Reliable and Low Latency Communications (URLLC); and
FIG. 21 is a block diagram illustrating an exemplary 5G system architecture for a non-roaming scenario.

### Description of Embodiments

Hereinafter, embodiments of the present disclosure will be described in detail with reference to the accompanying drawings.

Note that, in the following description, a radio frame, a slot, and a symbol are, for example, each a physical resource unit in a time domain, for example. For example, the length of one frame may be 10 milliseconds. For example, one frame may be configured by a plurality (e.g., 10, 20, or another value) of slots. Further, for example, the number of slots configuring one frame may be variable depending on the slot length. Furthermore, for example, one slot may be configured by a plurality (e.g., 14 or 12) of symbols. For example, one symbol is the smallest physical resource unit in the time domain, and the symbol length may vary depending on the subcarrier spacing (SCS).

Further, a subcarrier and a resource block (RB) are each a physical resource unit in a frequency domain. For example, one resource block may be configured by 12 subcarriers. For example, one subcarrier may be the smallest physical resource unit in the frequency domain. The subcarrier spacing (SCS) is variable, and may be 15 kHz, 30 kHz, 60 kHz, 120 kHz, 240 kHz, 480 kHz, and 960 kHz or another value, for example.

### [Regarding evolved Reduced Capability NR Devices]

In Release 18 NR (hereinafter also referred to as Rel-18), terminals called evolved Reduced Capability NR Devices (eRedCap) (for example, a mobile station or user equipment (UE)) (for example, referred to as eRedCap terminals) are expected to be supported. The eRedCap terminal aims to reduce, for example, power consumption or manufacturing cost and realize support for various use cases by limiting a part of characteristics or performance (for example, capability) supported, as compared with Release 15/16/17 (for example, also referred to as Rel-15/16/17) and the like (for example, see NPL 2).

The following three types of terminals may access a cell (for example, frequency range 1 (FR1) cell) that supports NR after Rel-18.
- RedCap terminal (reduced capability NR devices)
- eRedCap terminal
- non-RedCap terminal

The RedCap terminal may be, for example, a terminal in which the number of resource blocks (for example, the number of Physical Resource Blocks (PRBs)) used for transmitting and receiving a downlink data channel (for example, a physical downlink shared channel (PDSCH)) or an uplink data channel (for example, a physical uplink shared channel (PUSCH)) is equivalent to a maximum of 20 MHz. In addition, the RedCap terminal may be, for example, a terminal supported in Release 17 NR (hereinafter, also referred to as Rel-17).

In addition, the eRedCap terminal may be, for example, a terminal in which the number of PRBs used for transmitting and receiving the PDSCH/PUSCH is equivalent to a maximum of 5 MHz.

In addition, the non-RedCap terminal may be, for example, a terminal that does not belong to any of the RedCap terminal and the eRedCap terminal. For example, the non-RedCap terminal may be a terminal in which the number of PRBs used for transmitting and receiving the PDSCH/PUSCH is equivalent to a maximum of 100 MHz.

### <Regarding Early Indication and PRACH Configuration for RedCap Terminal>

The RedCap terminal can indicate to a base station (for example, also referred to as gNB or gNodeB) that "itself is the RedCap terminal" by using, for example, an uplink channel (for example, a physical random access channel (PRACH) or a PUSCH) during initial access (random access procedure). As a result, the base station can apply appropriate resource allocation to the RedCap terminal at an early stage. This mechanism may be referred to as "early indication."

Hereinafter, an example of the early indication in the PRACH will be described.

The base station indicates, to the terminal, a configuration (for example, a PRACH configuration) of the PRACH that can be used by the terminal by using System Information (SI). The PRACH configurations may include, for example, parameters such as an identifier of the preamble (PRACH preamble index) and physical resources of the PRACH (PRACH occasion, RO).

The base station may indicate, for example, "PRACH configurations for non-RedCap" and "PRACH configurations for RedCap."

The RedCap terminal that has received the indication transmits a preamble (also referred to as a random access signal, a PRACH signal, Msg1, or MsgA) based on the "PRACH configurations for RedCap." As a result, the base station can recognize (or identify) that the terminal being a transmission source of the preamble received based on the PRACH configurations for RedCap is the RedCap terminal.

For example, in a case where only the RedCap terminal and the non-RedCap terminal access a certain cell (for example, in a case where the eRedCap terminal does not access), the early indication may be executed according to the above-described method. On the other hand, an early indication and a configuration method for the PRACH in a case where three types of terminals, that is, the eRedCap terminal, the RedCap terminal, and the non-RedCap terminal access the cell have not been sufficiently studied.

Therefore, in non-limiting examples of the present disclosure, for example, a configuration method for the PRACH in a case where three types of terminals, that is, an eRedCap terminal, a RedCap terminal, and a non-RedCap terminal access a cell will be described.

Examples of the method include a method in which the base station indicates three types of PRACH configurations, that is, a "PRACH configuration for eRedCap," in addition to a "PRACH configuration for non-RedCap" and a "PRACH configuration for RedCap." However, in this method, the number of test items (for example, verification of an operation) for testing whether or not the three types of PRACH configurations can be appropriately operated is increased, which may lead to an increase in the cost of the terminal.

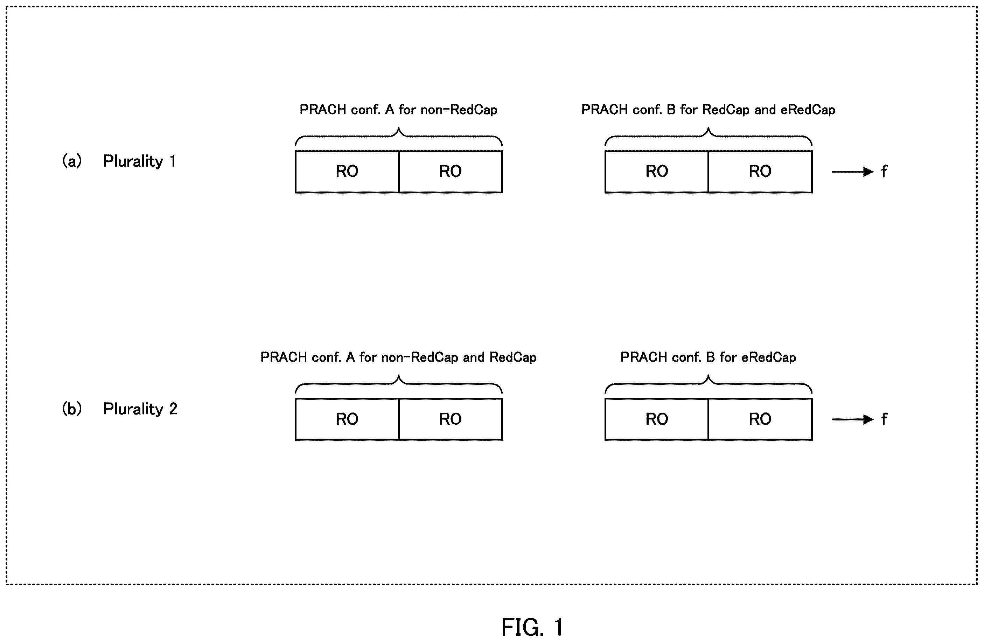

Here, a case can be assumed in which the number of RedCap terminals accessing a certain cell is significantly larger than the number of eRedCap terminals. In this case, the base station can indicate the following combination of two PRACH configurations (for example, also referred to as "Plurality 1") as shown in part (a) in FIG. 1. In this combination of the PRACH configurations, the RedCap terminal and the eRedCap terminal can transmit the preamble by using a common PRACH configuration.
- PRACH configuration A: configuration for non-RedCap terminal
- PRACH configuration B: configuration for RedCap terminal and eRedCap terminal

On the other hand, a case can be assumed in which the number of eRedCap terminals accessing a certain cell is significantly larger than the number of RedCap terminals. In this case, the base station can indicate the following combination of two PRACH configurations (for example, also referred to as "Plurality 2") as shown in part (b) in FIG. 1. In this combination of the PRACH configurations, the non-RedCap terminal and the RedCap terminal can transmit the preamble by using a common PRACH configuration.
- PRACH configuration A: configuration for non-RedCap terminal and RedCap terminal
- PRACH configuration B: configuration for eRedCap terminal

According to these PRACH configuration methods, since the number of PRACH configurations included in one combination (Plurality) of the PRACH configurations is two, there is an effect that tests or the like by the terminal are simple as compared with a case where the PRACH configuration is used for each of the three types of terminals.

For example, the base station can determine which of the combinations (for example, Plurality 1 and Plurality 2) of the PRACH configurations is to be indicated to the terminal, according to a cell situation (or a certain condition). By making the combination of the PRACH configurations to be indicated variable according to the cell situation, it is possible to operate more appropriate PRACH configurations.

Hereinafter, an example of a method for indicating the plurality of PRACH configurations (combination of the PRACH configurations) will be described.

### [Outline of Communication System]

A communication system according to the present embodiment includes base station 100 and terminal 200. Terminal 200 may be, for example, an eRedCap terminal, a RedCap terminal, or a non-eRedCap terminal.

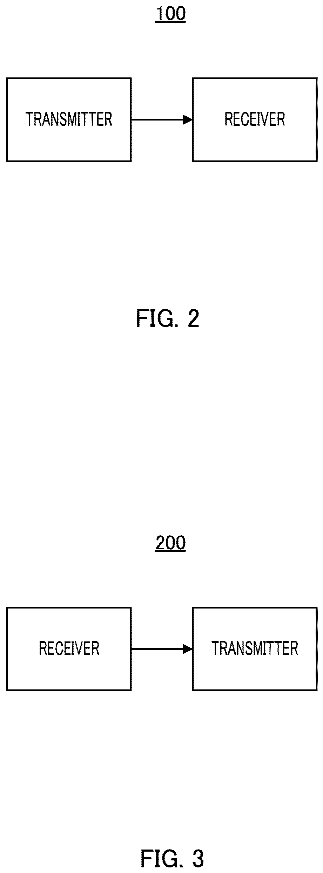

FIG. 2 is a block diagram showing a partial exemplary configuration of base station 100 according to the present embodiment. In base station 100 shown in FIG. 1, a transmitter (for example, corresponding to transmission circuitry) transmits information regarding a second number of configurations (e.g., PRACH configurations) for a random access signal, the second number being smaller than a first number, for a terminal of a first number of types. A receiver (for example, reception circuitry) receives the random access signal based on the information.

FIG. 3 is a block diagram showing a partial exemplary configuration of terminal 200 according to the present embodiment. In terminal 200 shown in FIG. 2, a receiver (for example, corresponding to reception circuitry) receives information on a second number of configurations of a random access signal for a terminal of a first number of types, the second number being smaller than the first number. A transmitter (for example, corresponding to transmission circuitry) transmits the random access signal based on the information.

### (Embodiment 1)

In the present embodiment, base station 100 may indicate, to terminal 200, each of the plurality of PRACH configurations by using at least one of the following:
- SI part X;
- SI part Y; and
- SI part Z.

In System Information (SI), SI part X may be, for example, SI which can be decoded by the non-RedCap terminal, the RedCap terminal, and the eRedCap terminal.

In the SI, SI part Y may be, for example, SI which can be decoded by the RedCap terminal and the eRedCap terminal. For example, SI part Y may not be decoded by the non-RedCap terminal.

In the SI, SI part Z may be, for example, SI which can be decoded (or identified) by the eRedCap terminal. For example, SI part Z may not be decoded by the non-RedCap terminal and the RedCap terminal.

Terminal 200 may transmit the preamble based on the PRACH configurations included in any SI part of SI part X, SI part Y, or SI part Z, for example.

Terminal 200 may select the SI part, for example, according to the following selection method.

For example, in a case where the eRedCap terminal identifies the PRACH configuration (referred to as "PRACH configuration Z") included in SI part Z, the eRedCap terminal selects PRACH configuration Z. In addition, in a case where the eRedCap terminal identifies the PRACH configuration (referred to as "PRACH configuration Y") included in SI part Y without identifying PRACH configuration Z, the eRedCap terminal selects PRACH configuration Y. In addition, in a case where the eRedCap terminal identifies the PRACH configuration (referred to as "PRACH configuration X") included in SI part X without identifying any of PRACH configuration Z and PRACH configuration Y, the eRedCap terminal selects PRACH configuration X. That is, the eRedCap terminal preferentially selects PRACH configuration Y indicated by SI part Y over PRACH configuration X indicated by SI part X, and preferentially selects PRACH configuration Z indicated by SI part Z over PRACH configuration Y indicated by SI part Y.

In addition, for example, in a case where the RedCap terminal identifies PRACH configuration Y, the RedCap terminal selects PRACH configuration Y. In addition, in a case where the RedCap terminal identifies PRACH configuration X without identifying PRACH configuration Y, the RedCap terminal selects PRACH configuration X. That is, the RedCap terminal preferentially selects PRACH configuration Y indicated by SI part Y over PRACH configuration X indicated by SI part X.

In addition, for example, in a case where the non-RedCap terminal identifies PRACH configuration X, the non-RedCap terminal selects PRACH configuration X.

As described above, terminal 200 need only decode the information necessary for terminal 200, and thus can suppress the complexity and the power consumption related to the preamble transmission processing.

### [Configuration of Base Station]

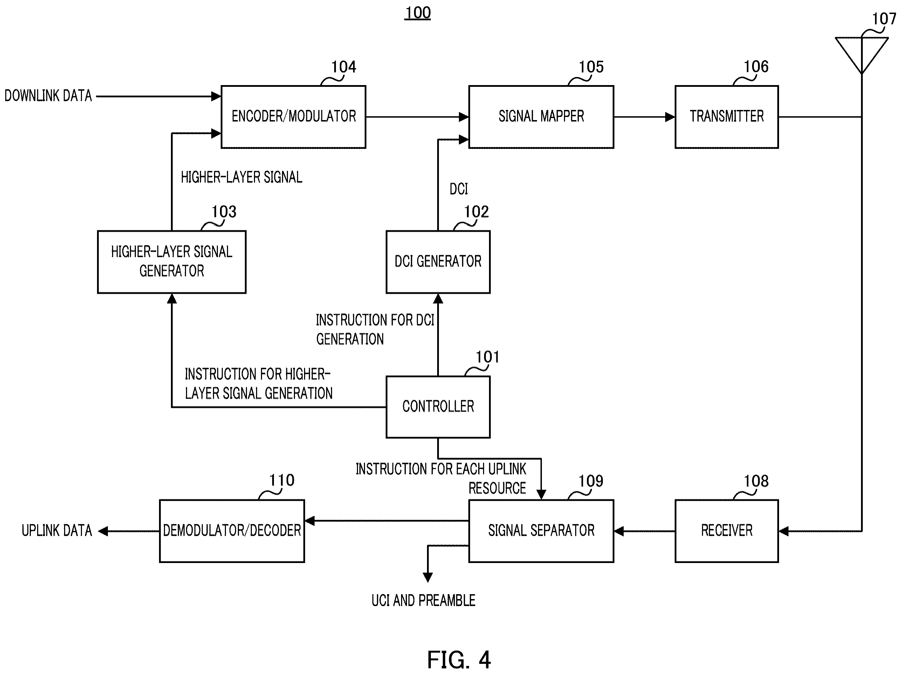

FIG. 4 is a block diagram showing an exemplary configuration of base station 100 according to the present embodiment. In FIG. 4, base station 100 includes controller 101, Downlink Control Information (DCI) generator 102, higher-layer signal generator 103, encoder/modulator 104, signal mapper 105, transmitter 106, antenna 107, receiver 108, signal separator 109, and demodulator/decoder 110.

For example, at least one of transmitter 106 and antenna 107 shown in FIG. 4 may be included in the transmitter shown in FIG. 2. In addition, for example, at least one of antenna 107 or receiver 108 shown in FIG. 4 may be included in the receiver shown in FIG. 2.

Controller 101 may determine, for example, the resource to be allocated to terminal 200 (for example, including a downlink resource and an uplink resource). In addition, controller 101 may determine, for example, a configuration of the PRACH.

For example, controller 101 may instruct higher-layer signal generator 103 to generate a higher-layer signal (for example, also referred to as a higher-layer parameter or higher-layer signaling) based on information on the determined resource or information on the PRACH configurations. In addition, controller 101 may instruct DCI generator 102 to generate control information (for example, DCI) included in a downlink control channel (for example, PDCCH), for example, based on the information on the determined resource or the information on the PRACH configurations.

In addition, controller 101 outputs (or instructs) the information on the downlink resource to signal mapper 105 and outputs (or instructs) the information on the uplink resource to signal separator 109.

DCI generator 102 may generate the DCI based on, for example, the instruction from controller 101 and output the generated DCI to signal mapper 105.

Higher-layer signal generator 103 may generate a higher-layer signal such as system information (SI) based on, for example, the instruction from controller 101 and output the generated higher-layer signal to encoder/modulator 104.

Encoder/modulator 104 may perform error correction encoding and modulation on, for example, downlink data and the higher-layer signal input from higher-layer signal generator 103 and output the modulated signal to signal mapper 105.

Signal mapper 105 may map, for example, at least one of the DCI input from DCI generator 102 or the signal input from encoder/modulator 104 to the resource. For example, signal mapper 105 may map the signal input from encoder/modulator 104 to a PDSCH resource and map the DCI to a downlink control channel (for example, a physical downlink control channel (PDCCH)) resource. Signal mapper 105 outputs the signal mapped to each resource to transmitter 106.

Transmitter 106 performs, for example, radio transmission processing including frequency conversion (for example, up conversion) using a carrier wave on the signal input from signal mapper 105 and outputs the signal after the radio transmission processing to antenna 107.

Antenna 107 radiates, for example, the signal (for example, the downlink signal) input from transmitter 106 toward terminal 200. In addition, antenna 107 receives, for example, an uplink signal transmitted from terminal 200 and outputs the uplink signal to receiver 108.

The uplink signal may be, for example, a signal of a channel such as an uplink data channel (e.g., PUSCH), uplink control channel (e.g., Physical Uplink Control Channel (PUCCH)), or random access channel (e.g., Physical Random Access Channel (PRACH)).

Receiver 108 performs, for example, radio reception processing including frequency conversion (for example, down conversion) on the signal input from antenna 107 and outputs the signal after the radio reception processing to signal separator 109.

Signal separator 109 extracts (or separates) a signal (for example, uplink control information (UCI)) on a PUCCH resource and a signal (for example, a preamble) on a PRACH, from the signal input from receiver 108, for example, based on the information on the uplink resource input from controller 101. In addition, signal separator 109 outputs, for example, the signal on the PUSCH resource in the signal input from receiver 108 to demodulator/decoder 110.

Demodulator/decoder 110 demodulates and decodes, for example, the signal input from signal separator 109 to output uplink data.

### [Configuration of Terminal]

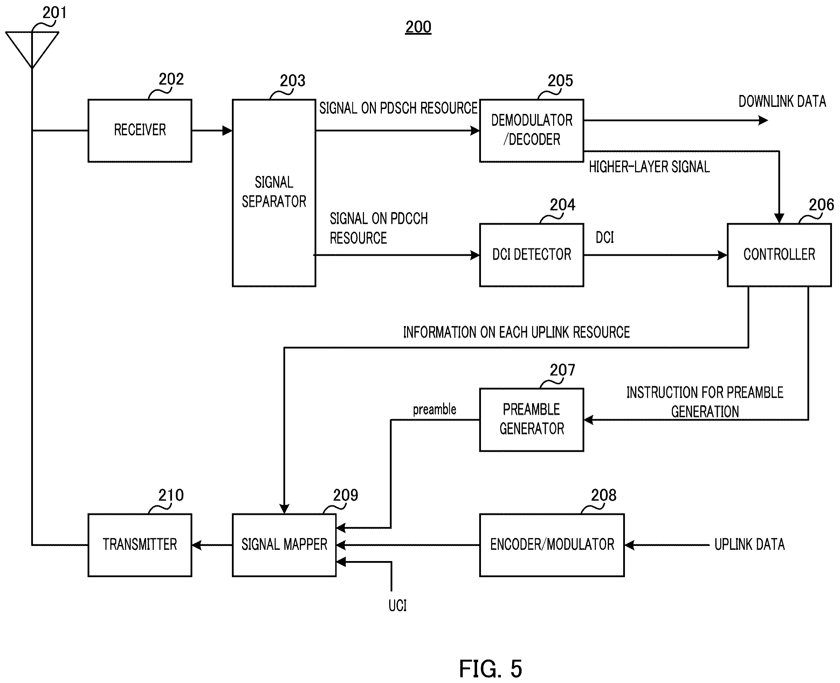

FIG. 5 is a block diagram showing an exemplary configuration of terminal 200 according to the present embodiment.

In FIG. 5, terminal 200 includes antenna 201, receiver 202, signal separator 203, DCI detector 204, demodulator/decoder 205, controller 206, preamble generator 207, encoder/modulator 208, signal mapper 209, and transmitter 210.

For example, at least one of antenna 201 or receiver 202 shown in FIG. 5 may be included in the receiver shown in FIG. 3. In addition, for example, at least one of antenna 201 or transmitter 210 shown in FIG. 5 may be included in the transmitter shown in FIG. 3.

Antenna 201 receives, for example, a downlink signal (downlink channel) transmitted by base station 100 and outputs the downlink signal to receiver 202. In addition, antenna 201 radiates, for example, the uplink signal (uplink channel) input from transmitter 210 to base station 100.

For example, receiver 202 performs radio reception processing including frequency conversion (e.g., down-conversion) on the signal input from antenna 201, and outputs the signal after the radio reception processing to signal separator 203.

Signal separator 203 extracts (for example, separates) a signal on a PDCCH resource in the signal input from receiver 202 and outputs the signal to DCI detector 204. Further, signal separator 203 outputs, for example, the signal on the PDSCH resource in the signal input from receiver 202 to demodulator/decoder 205 based on an instruction from controller 206. Signal separator 203 may perform signal separation based on, for example, information (not shown) related to the downlink resource input as an instruction from controller 206.

For example, DCI detector 204 may detect DCI from the signal (e.g., signal on PDCCH resource) input from signal separator 203. DCI detector 204 may output the detected DCI to controller 206, for example.

Demodulator/decoder 205 performs demodulation and error correction decoding on, for example, the signal (for example, the signal on the PDSCH resource) input from signal separator 203 to obtain at least one of the downlink data or the higher-layer signal such as system information (SI). Demodulator/decoder 205 may output, for example, the higher-layer signal (for example, SI) obtained by decoding to controller 206. Further, demodulator/decoder 205 may output the downlink data obtained by decoding, for example.

Controller 206 may determine (or identify) the downlink resource and the uplink resource (for example, the PRACH configurations) based on, for example, at least one of the DCI input from DCI detector 204 or the higher-layer signal (for example, SI) input from the demodulator/decoder 205. For example, controller 206 may output (for example, instruct) the information on the identified uplink resource to signal mapper 209. In addition, for example, controller 206 may instruct preamble generator 207 to generate the preamble based on the identified PRACH configuration.

Preamble generator 207 generates, for example, the preamble in accordance with the instruction of controller 206 and outputs the generated preamble to signal mapper 209.

Encoder/modulator 208 may perform encoding and modulation on, for example, uplink data and output the modulated signal to signal mapper 209.

Signal mapper 209 may map, for example, the signal input from the encoder/modulator 208 to a PUSCH resource, map the UCI to a PUCCH resource, and map the preamble to a PRACH resource, based on the information on the uplink resource input from controller 206. Signal mapper 209 outputs the signal mapped to each resource to transmitter 210.

Transmitter 210 performs, for example, radio transmission processing including frequency conversion (for example, up conversion) on the signal input from signal mapper 209 and outputs the signal after the radio transmission processing to antenna 201.

### [Exemplary Operation of Base Station 100 and Terminal 200]

Next, an exemplary operation of base station 100 and terminal 200 described above will be described.

### <Exemplary Operation 1-1>

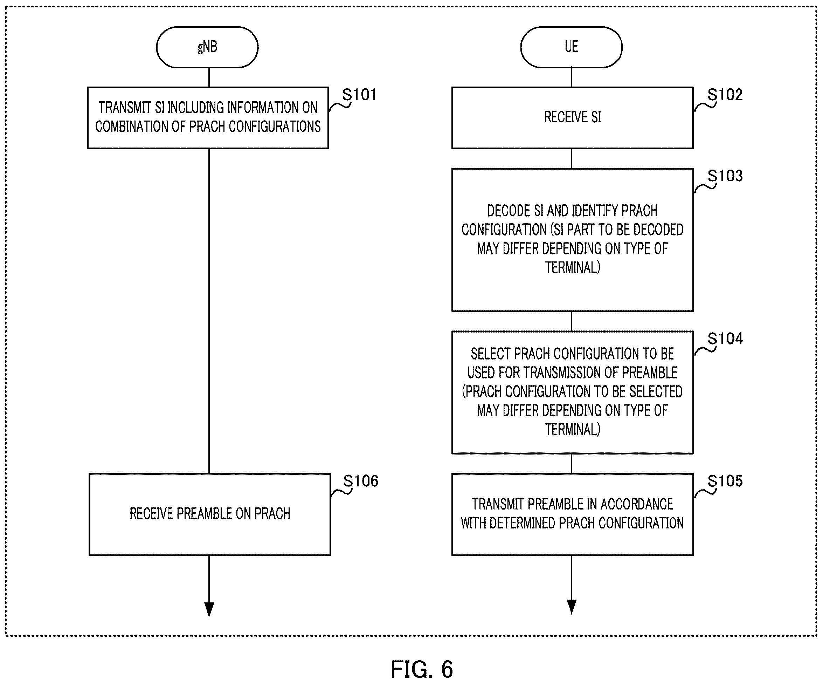

FIG. 6 is a flowchart showing an example of processing of base station 100 (for example, gNB) and terminal 200 (for example, UE) according to exemplary operation 1-1.

### (S101)

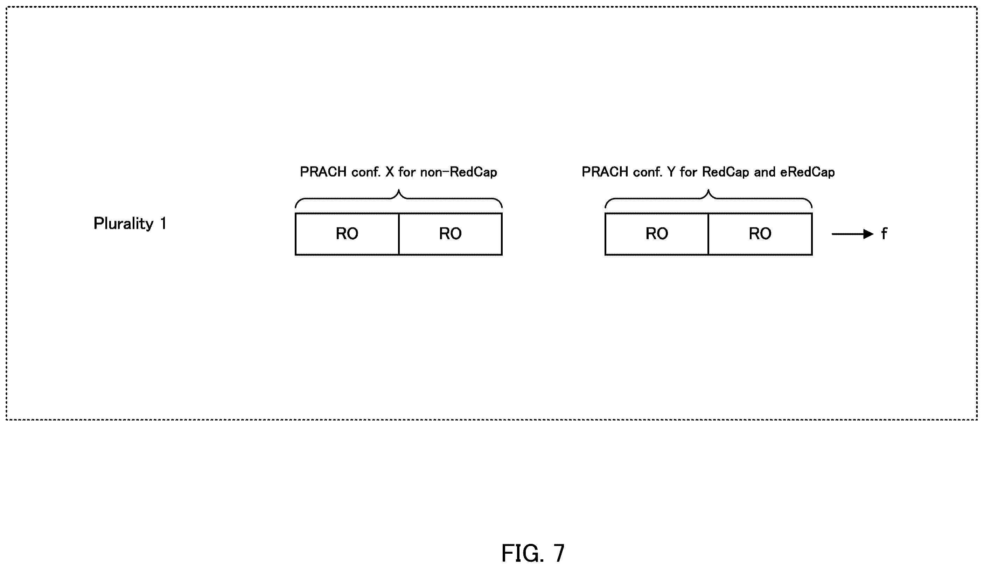

Base station 100 determines a combination of the PRACH configurations. Here, for example, as shown in FIG. 7, the following combination (Plurality 1) of the plurality of (for example, two) PRACH configurations may be determined.
- PRACH configuration X: PRACH configuration for non-RedCap terminal
- PRACH configuration Y: PRACH configuration for RedCap terminal and eRedCap terminal

The plurality of PRACH configurations (for example, the PRACH preamble index and the PRACH occasion (for example, time/frequency resource)) included in the combination of the PRACH configurations may include different configurations. For example, in FIG. 7, at least one of the PRACH preamble index and the PRACH occasion (for example, the time/frequency resource) may be different between PRACH configuration X and PRACH configuration Y. As a result, by using at least one of the preamble index and the PRACH occasion of the received PRACH, base station 100 can identify the type of terminal 200 that has transmitted the preamble.

In addition, base station 100 indicates, to terminal 200, for example, information on the determined combination of the PRACH configurations (for example, each of the plurality of PRACH configurations included in the combination of the PRACH configurations) by using, for example, SI. For example, the plurality of PRACH configurations (for example, PRACH configuration X and PRACH configuration Y) included in the combination of the PRACH configurations may be allocated in the SI and indicated to terminal 200 as follows.
- PRACH configuration X: in the SI, an SI which can be decoded (or identified) by the non-RedCap terminal, the RedCap terminal, and the eRedCap terminal (hereinafter, referred to as "SI part X")
- PRACH configuration Y: in the SI, an SI which can be decoded (or identified) by the RedCap terminal and the eRedCap terminal (hereinafter, referred to as "SI part Y")

SI part X may be information based on the SI corresponding to Rel-15 or Rel-16, and SI part Y may be information based on the SI corresponding to Rel-17.

Base station 100 transmits the SI (for example, SI part X and SI part Y) including the information on the combination of the PRACH configurations to terminal 200. As described above, base station 100 indicates, to terminal 200, information on two types of PRACH configurations (PRACH configuration X and PRACH configuration Y) for three types of terminal types (non-RedCap terminal, RedCap terminal, and eRedCap terminal) by using SI part X and SI part Y, for example.

### (S102)

Terminal 200 receives the SI transmitted from base station 100.

### (S103)

Terminal 200 decodes the SI received in S102 to identify the PRACH configurations. The decoding operation (or the SI part to be decoded) may differ depending on the type of terminal 200 (for example, any of the non-RedCap terminal, the RedCap terminal, or the eRedCap terminal).

For example, the non-RedCap terminal may decode SI part X. In exemplary operation 1-1, the non-RedCap terminal may identify PRACH configuration X included in SI part X.

In addition, for example, the RedCap terminal may attempt to decode SI part Y and SI part X. In exemplary operation 1-1, the RedCap terminal may identify PRACH configuration X included in SI part X and PRACH configuration Y included in SI part Y.

In addition, for example, the eRedCap terminal may attempt to decode SI part Z, SI part Y, and SI part X. In exemplary operation 1-1, the eRedCap terminal may identify PRACH configuration X included in SI part X and PRACH configuration Y included in SI part Y.

In the above-described example, a case has been described in which terminals 200 (for example, the non-RedCap terminal, the RedCap terminal, and the eRedCap terminal) attempt to decode all pieces of the SI that can be decoded according to the terminal type, but the present disclosure is not limited to this. In exemplary operation 1-1, information indicating the use of Plurality 1 (for example, PRACH configuration X and PRACH configuration Y) as the combination of the plurality of PRACH configurations may be separately indicated to terminal 200 by using a control signal or the like. In this case, for example, the eRedCap terminal may perform decoding processing on SI part Y and SI part X without performing decoding processing on SI part Z (SI corresponding to PRACH configuration Z not included in Plurality 1).

In addition, in exemplary operation 1-1, for example, in a case where the RedCap terminal and the eRedCap terminal identify PRACH configuration Y, the RedCap terminal and the eRedCap terminal may omit the decoding processing on SI part X.

### (S104)

Terminal 200 selects the PRACH configuration used for preamble transmission from among the PRACH configurations identified in S103. For example, the selection operation of the PRACH configurations may differ as follows depending on the type of terminal 200 (terminal type).

For example, the non-RedCap terminal may select PRACH configuration X.

In addition, for example, the RedCap terminal and the eRedCap terminal may preferentially select PRACH configuration Y over PRACH configuration X from among the identified PRACH configuration X and PRACH configuration Y.

For example, the RedCap terminal and the eRedCap terminal may preferentially decode or select PRACH configuration Y included in SI part Y that is decodable for a smaller number of terminal types (for example, the RedCap terminal and the eRedCap terminal) over PRACH configuration X included in SI part X that is decodable for a large number of terminal types (for example, the non-RedCap terminal, the RedCap terminal, and the eRedCap terminal).

In addition, for example, the RedCap terminal and the eRedCap terminal may preferentially decode or select PRACH configuration Y included in SI part Y based on Rel-17, which is a newer release, over PRACH configuration X included in SI part X based on Rel-15/16.

### (S105)

Terminal 200 transmits the preamble based on each PRACH configuration selected in S104.

### (S106)

Base station 100 receives the preamble based on the PRACH configurations.

According to exemplary operation 1-1, terminal 200 need only decode the information necessary for terminal 200, and thus there is an effect of reducing the complexity or the power consumption related to the preamble transmission.

### <Exemplary Operation 1-2>

An example of processing of base station 100 (for example, gNB) and terminal 200 (for example, UE) according to exemplary operation 1-2 may be the same as the example of the processing of exemplary operation 1-1 shown in FIG. 6.

### (S101)

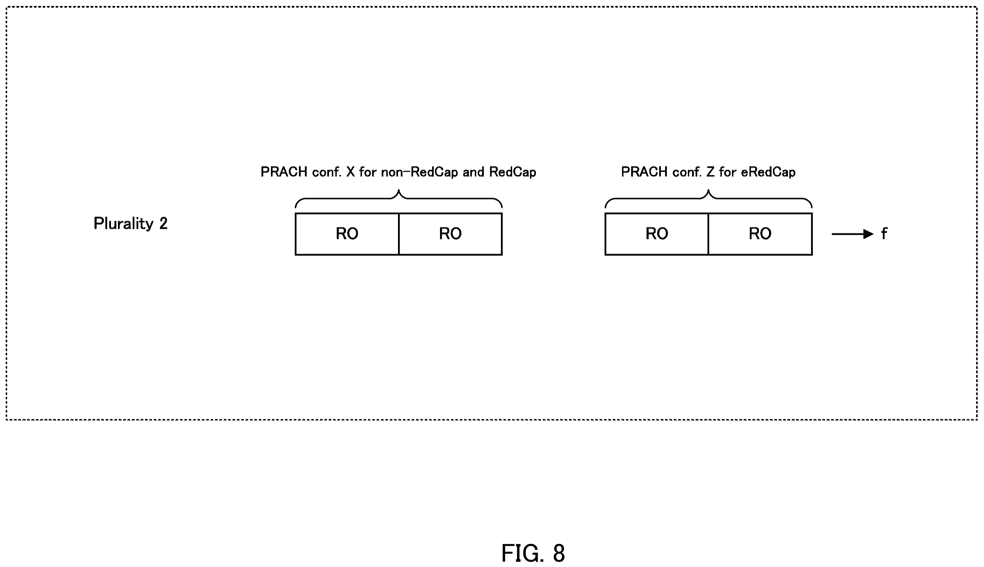

Base station 100 determines a combination of the PRACH configurations. Here, for example, as shown in FIG. 8, the following combination (Plurality 2) of the plurality of (for example, two) PRACH configurations may be determined.
- PRACH configuration X: PRACH configuration for non-RedCap terminal and RedCap terminal
- PRACH configuration Z: PRACH configuration for eRedCap terminal

The plurality of PRACH configurations (for example, the PRACH preamble index and the PRACH occasion (for example, time/frequency resource)) included in the combination of the PRACH configurations may include different configurations. For example, in FIG. 8, at least one of the PRACH preamble index and the PRACH occasion (for example, the time/frequency resource) may be different between PRACH configuration X and PRACH configuration Z. As a result, base station 100 can identify the type of terminal 200 that has transmitted the preamble by using at least one of the preamble index and the PRACH occasion of the received PRACH.

In addition, base station 100 indicates, to terminal 200, for example, information on the determined combination of the PRACH configurations (for example, each of the plurality of PRACH configurations included in the combination of the PRACH configurations) by using, for example, SI. For example, the plurality of PRACH configurations (for example, PRACH configuration X and PRACH configuration Z) included in the combination of the PRACH configurations may be allocated in the SI and indicated to terminal 200 as follows.
- PRACH configuration X: in the SI, an SI which can be decoded by the non-RedCap terminal, the RedCap terminal, and the eRedCap terminal (hereinafter, referred to as "SI part X")
- PRACH configuration Z: in the SI, an SI which can be decoded by the eRedCap terminal (hereinafter, referred to as "SI part Z")

In exemplary operation 1-2, unlike SI part Y of exemplary operation 1-1, SI part Z may not be decoded by a terminal (for example, a RedCap terminal) different from the eRedCap terminal.

SI part X may be information based on the SI corresponding to Rel-15 or Rel-16, and SI part Z may be information based on the SI corresponding to Rel-18.

Base station 100 transmits the SI (for example, SI part X and SI part Z) including the information on the combination of the PRACH configurations to terminal 200. As described above, base station 100 indicates, to terminal 200, the information on two types of PRACH configurations (PRACH configuration X and PRACH configuration Z) for three types of terminal types (non-RedCap terminal, RedCap terminal, and eRedCap terminal) by using SI part X and SI part Z, for example.

### (S102)

Terminal 200 receives the SI transmitted from base station 100.

### (S103)

Terminal 200 decodes the SI to identify the PRACH configurations. The decoding operation (or the SI part to be decoded) may differ depending on the type of terminal 200 (for example, any of the non-RedCap terminal, the RedCap terminal, and the eRedCap terminal).

For example, the non-RedCap terminal may decode SI part X. In exemplary operation 1-2, the non-RedCap terminal may identify PRACH configuration X included in SI part X.

In addition, for example, the RedCap terminal may attempt to decode SI part Y and SI part X. In exemplary operation 1-2, the RedCap terminal may identify PRACH configuration X included in SI part X. As described above, in exemplary operation 1-2, unlike exemplary operation 1-1, the RedCap terminal does not identify the PRACH configuration (for example, PRACH configuration Y) different from PRACH configuration X.

In addition, for example, the eRedCap terminal may attempt to decode SI part Z, SI part Y, and SI part X. In exemplary operation 1-2, the eRedCap terminal may identify PRACH configuration X included in SI part X and PRACH configuration Z included in SI part Z.

In the above-described example, a case has been described in which terminals 200 (for example, the non-RedCap terminal, the RedCap terminal, and the eRedCap terminal) attempt to decode all pieces of the SI that can be decoded according to the terminal type, but the present disclosure is not limited to this. In exemplary operation 1-2, information indicating the use of Plurality 2 (for example, PRACH configuration X and PRACH configuration Z) as the combination of the plurality of PRACH configurations may be separately indicated to terminal 200 by using a control signal or the like. In this case, for example, the eRedCap terminal may perform decoding processing on SI part Z and SI part X without performing decoding processing on SI part Y (SI corresponding to PRACH configuration Y not included in Plurality 2), and the RedCap terminal may perform decoding processing on SI part X without performing decoding processing on SI part Y.

In addition, in exemplary operation 1-2, for example, in a case where the eRedCap terminal identifies PRACH configuration Z, the eRedCap terminal may omit the decoding processing on SI part X and SI part Y.

### (S104)

Terminal 200 selects the PRACH configuration used for preamble transmission from among the PRACH configurations identified in S103. For example, the selection operation of the PRACH configurations may differ as follows depending on the type of terminal 200 (terminal type).

For example, the non-RedCap terminal and the RedCap terminal may select PRACH configuration X.

In addition, for example, the eRedCap terminal may preferentially select PRACH configuration Z over PRACH configuration X from among the identified PRACH configuration Z and PRACH configuration X.

For example, the eRedCap terminal may preferentially decode or select PRACH configuration Z included in SI part Z that is decodable for a smaller number of terminal types (for example, the eRedCap terminal) over PRACH configuration X included in SI part X that is decodable for a large number of terminal types (for example, the non-RedCap terminal, the RedCap terminal, and the eRedCap terminal).

In addition, for example, the eRedCap terminal may preferentially decode or select PRACH configuration Z included in SI part Z based on Rel-18, which is a newer release, over PRACH configuration X included in SI part X based on Rel-15/16.

### (S105)

Terminal 200 transmits the preamble based on each PRACH configuration selected in S104.

### (S106)

Base station 100 receives the preamble based on the PRACH configurations.

According to exemplary operation 1-2, terminal 200 need only decode the information necessary for terminal 200, and thus there is an effect of reducing the complexity or the power consumption related to the preamble transmission.

Exemplary operations of base station 100 and terminal 200 have been described above.

As described above, in the present embodiment, base station 100 transmits the information on the second number of PRACH configurations (for example, two types of PRACH configurations) for the terminal of the first number of types (for example, three types of terminal types) to terminal 200, the second number being smaller than the first number, and receives the PRACH signal (for example, the preamble) based on the information. In addition, terminal 200 receives the information on the second number of PRACH configurations (for example, two types of PRACH configurations) for the terminal of the first number of types (for example, three types of terminal types) from base station 100, the second number being smaller than the first number, and transmits the PRACH signal (for example, the preamble) based on the information.

As a result, for example, even in a case where three types of terminals, that is, the eRedCap terminal, the RedCap terminal, and the non-RedCap terminal access the cell, terminal 200 of each type can transmit the preamble based on appropriate PRACH configurations. Therefore, according to the present embodiment, terminal 200 can appropriately transmit the preamble.

For example, even in a case where three types of terminals, that is, the eRedCap terminal, the RedCap terminal, and the non-RedCap terminal access the cell, by using the method for indicating two types of PRACH configurations, it is possible to suppress an increase in the number of test items and to suppress an increase in the cost of terminal 200 as compared with a case of operating three types of PRACH configurations for each terminal type.

In addition, in the present embodiment, terminal 200 determines, for example, which of the plurality of PRACH configurations included in the obtained SI (for example, any of SI part X, SI part Y, and SI part Z) is to be preferentially selected according to the terminal type of terminal 200. That is, base station 100 can implicitly indicate "information regarding which type of terminal uses each PRACH configuration" by allocating the PRACH configurations for terminal types respectively to different parts of SI (for example, SI part X, SI part Y, and SI part Z) which are identifiable for different terminal types (or in which the number of terminal types differs), and indicating such SI. As a result, terminal 200 can identify the PRACH configurations without explicit indication of "information on which type of terminal uses each PRACH configuration."

In the present embodiment, base station 100 may flexibly switch the PRACH configurations (for example, combinations of PRACH configurations) according to information (or conditions) related to the cell situation, such as the number of terminals of each terminal type accessing the cell, different use cases, or time periods.

For example, any one of a plurality of candidates (for example, Plurality 1 and Plurality 2 described above) for the information on the combination of the PRACH configurations may be indicated to terminal 200 according to a certain condition (or situation). For example, base station 100 may indicate, to terminal 200, the combination (Plurality 1) of the PRACH configurations as in exemplary operation 1-1 in a certain situation, and may indicate, to terminal 200, the combination (Plurality 2) of the PRACH configurations as in exemplary operation 1-2 in another situation.

For example, in a case where the number of RedCap terminals accessing the cell is significantly larger than the number of eRedCap terminals (for example, in a case where a difference between the number of RedCap terminals and the number of eRedCap terminals is equal to or greater than a threshold value), base station 100 may indicate, to terminal 200, the PRACH configurations as in exemplary operation 1-1. As a result, the RedCap terminal can appropriately transmit the preamble based on the PRACH configuration different from that for the non-RedCap terminal.

In addition, for example, in a case where the number of eRedCap terminals accessing the cell is significantly larger than the number of RedCap terminals (for example, in a case where a difference between the number of eRedCap terminals and the number of RedCap terminals is equal to or greater than a threshold value), base station 100 may indicate, to terminal 200, the PRACH configurations as in exemplary operation 1-2. As a result, the eRedCap terminal can appropriately transmit the preamble based on the PRACH configuration that can be used only by the eRedCap terminal.

As described above, base station 100 can indicate an optimal PRACH configuration according to the cell situation. In addition, terminal 200 may flexibly switch the PRACH configurations to be used, for example, according to the indication (for example, the identified SI) from base station 100.

### (Embodiment 2)

Base station 100 and terminal 200 according to the present embodiment may be the same as those in Embodiment 1.

Base station 100 explicitly indicates, to terminal 200, for example, "information on the plurality of PRACH configurations" and "information on which type of terminal uses each PRACH configuration."

Terminal 200 selects the PRACH configurations based on the information indicated (or instructed) from base station 100 and transmits the preamble based on the selected PRACH configurations.

Hereinafter, exemplary operations of base station 100 and terminal 200 according to the present embodiment will be described.

### <Exemplary Operation 2-1>

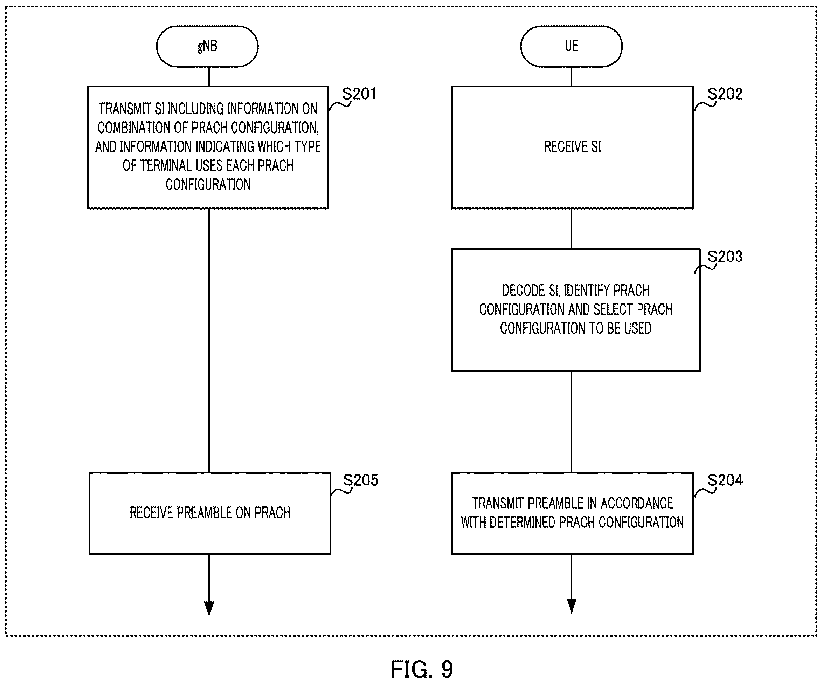

FIG. 9 is a flowchart showing an example of processing of base station 100 (for example, gNB) and terminal 200 (for example, UE) according to exemplary operation 2-1.

### (S201)

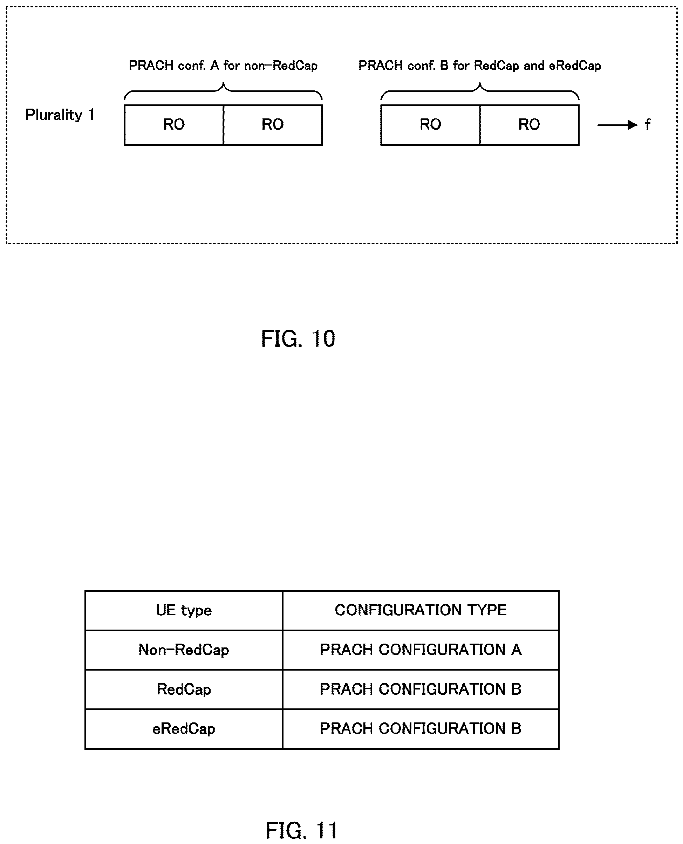

Base station 100 determines a combination of the PRACH configurations. Here, for example, as shown in FIG. 10, the following combination (Plurality 1) of the plurality of (for example, two) PRACH configurations may be determined.
- PRACH configuration A: PRACH configuration for non-RedCap terminal
- PRACH configuration B: PRACH configuration for RedCap terminal and eRedCap terminal

The plurality of PRACH configurations (for example, the PRACH preamble index and the PRACH occasion (for example, time/frequency resource)) included in the combination of the PRACH configurations may include different configurations. For example, in FIG. 10, at least one of the PRACH preamble index and the PRACH occasion (for example, the time/frequency resource) may be different between PRACH configuration A and PRACH configuration B. As a result, base station 100 can identify the type of terminal 200 that has transmitted the preamble by using at least one of the preamble index and the PRACH occasion of the received PRACH.

In addition, for example, as shown in FIG. 11, base station 100 may determine information on a relationship (or association) between each of the plurality of PRACH configurations (for example, two types of configuration types) included in the combination of the PRACH configurations and the terminal types (for example, three types of non-RedCap terminal, RedCap terminal, and eRedCap terminal).

Base station 100 transmits, to terminal 200, SI including, for example, information on the combination of the PRACH configurations (for example, Plurality 1 including PRACH configuration A and PRACH configuration B) and information on the relationship between each PRACH configuration and the terminal type.

### (S202)

Terminal 200 receives the SI transmitted from base station 100.

### (S203)

Terminal 200 decodes the SI received in S202 to identify the combination of the PRACH configurations and the relationship between each PRACH configuration and the terminal type.

In addition, terminal 200 selects the PRACH configuration to be used for preamble transmission by terminal 200 based on the relationship between each PRACH configuration and the terminal type. For example, in the example of FIG. 11, terminal 200 selects PRACH configuration A in a case of the non-RedCap terminal, and selects PRACH configuration B in a case of the RedCap terminal or the eRedCap terminal.

### (S204)

Terminal 200 transmits the preamble based on each PRACH configuration selected in S203.

### (S205)

Base station 100 receives the preamble based on the PRACH configurations.

In exemplary operation 2-1, the information on the combination of the PRACH configurations and the information on the relationship between each PRACH configuration and the terminal type may be indicated by, for example, SI that is decodable for all terminal types (for example, the non-RedCap terminal, the RedCap terminal, and the eRedCap terminal). As a result, each terminal 200 can identify (or understand) "how base station 100 allocates each terminal type to the combination of the PRACH configurations" and can optimize subsequent operations based on the information.

In exemplary operation 2-1, the information on the combination of the PRACH configurations is not limited to a case of being indicated by the SI that is decodable for all terminal types. For example, the pieces of information on the combination of the PRACH configurations allocated to a plurality of pieces of SI which are identifiable for different terminal types may be indicated as in Embodiment 1. Even in this case, terminal 200, which is of a part of the terminal types, can identify the SI to be decoded, for example, based on the information on the relationship between each PRACH configuration and the terminal type, and thus the processing of terminal 200 can be simplified.

### <Exemplary Operation 2-2>

An example of processing of base station 100 (for example, gNB) and terminal 200 (for example, UE) according to exemplary operation 2-2 may be the same as the example of the processing of exemplary operation 2-1 shown in FIG. 10.

### (S201)

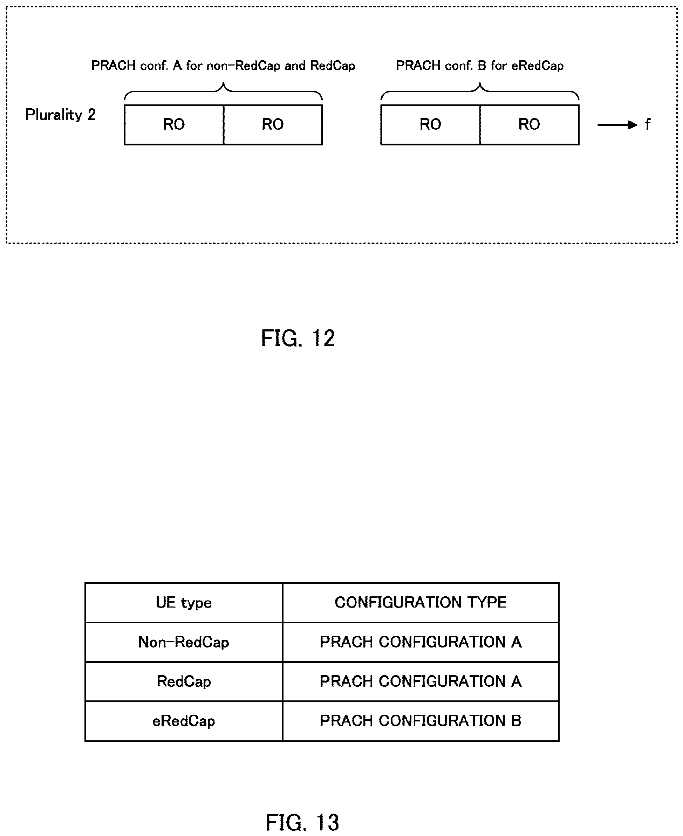

Base station 100 determines a combination of the PRACH configurations. Here, for example, as shown in FIG. 12, the following combination (Plurality 2) of the plurality of (for example, two) PRACH configurations may be determined.
- PRACH configuration A: PRACH configuration for non-RedCap terminal and RedCap terminal
- PRACH configuration B: PRACH configuration for eRedCap terminal

The plurality of PRACH configurations (for example, the PRACH preamble index and the PRACH occasion (for example, time/frequency resource)) included in the combination of the PRACH configurations may include different configurations. For example, in FIG. 12, at least one of the PRACH preamble index and the PRACH occasion (for example, the time/frequency resource) may be different between PRACH configuration A and PRACH configuration B. As a result, base station 100 can identify the type of terminal 200 that has transmitted the preamble by using at least one of the preamble index and the PRACH occasion of the received PRACH.

In addition, for example, as shown in FIG. 12, base station 100 may determine information on a relationship (or association) between each of the plurality of PRACH configurations (for example, a PRACH configuration index for identifying two types of PRACH configurations A and PRACH configurations B) included in the combination of the PRACH configurations and the terminal types (for example, three types of non-RedCap terminal, RedCap terminal, and eRedCap terminal).

Base station 100 transmits, to terminal 200, SI including, for example, information on the combination of the PRACH configurations (for example, Plurality 2 including PRACH configuration A and PRACH configuration B) and information on the relationship between each PRACH configuration and the terminal type.

### (S202)

Terminal 200 receives the SI transmitted from base station 100.

### (S203)

Terminal 200 decodes the SI received in S202 to identify the combination of the PRACH configurations and the relationship between each PRACH configuration and the terminal type.

In addition, terminal 200 selects the PRACH configuration (or the configuration type) to be used for preamble transmission by terminal 200 based on the relationship between each PRACH configuration and the terminal type. For example, in the example of FIG. 13, terminal 200 selects PRACH configuration A in a case of the non-RedCap terminal or the RedCap terminal, and selects PRACH configuration B in a case of the eRedCap terminal.

### (S204)

Terminal 200 transmits the preamble based on each PRACH configuration selected in S203.

### (S205)

Base station 100 receives the preamble based on the PRACH configurations.

In exemplary operation 2-2, the information on the combination of the PRACH configurations and the information on the relationship between each PRACH configuration and the terminal type may be indicated by, for example, SI that is decodable for all terminal types (for example, the non-RedCap terminal, the RedCap terminal, and the eRedCap terminal). As a result, each terminal 200 can identify (or understand) "how base station 100 allocates each terminal type to the combination of the PRACH configurations" and can optimize subsequent operations based on the information.

In exemplary operation 2-2, the information on the combination of the PRACH configurations is not limited to a case of being indicated by the SI that is decodable for all terminal types. For example, the pieces of information on the combination of the PRACH configurations allocated to a plurality of pieces of SI which are identifiable for different terminal types may be indicated as in Embodiment 1. Even in this case, terminal 200, which is of a part of the terminal types, can identify the SI to be decoded, for example, based on the information on the relationship between each PRACH configuration and the terminal type, and thus the processing of terminal 200 can be simplified.

The exemplary operations of base station 100 and terminal 200 have been described above.

As described above, in the present embodiment, the information on the second number of PRACH configurations (for example, two types of PRACH configurations) for the terminal of the first number of types (for example, three types of terminal types) is transmitted to terminal 200, the second number being smaller than the first number, and the PRACH signal (for example, the preamble) is received based on the information. In addition, terminal 200 receives the information on the second number of PRACH configurations (for example, two types of PRACH configurations) for the terminal of the first number of types (for example, three types of terminal types) from base station 100, the second number being smaller than the first number, and transmits the PRACH signal (for example, the preamble) based on the information.

As a result, for example, even in a case where three types of terminals, that is, the eRedCap terminal, the RedCap terminal, and the non-RedCap terminal access the cell, terminal 200 of each type can transmit the preamble based on the appropriate PRACH configuration. Therefore, according to the present embodiment, terminal 200 can appropriately transmit the preamble.

In addition, in the present embodiment, the information indicating the plurality of PRACH configurations and the information on the association between each PRACH configuration and the terminal type are explicitly indicated from base station 100 to terminal 200. As a result, terminal 200 can identify the PRACH configuration to be used by each terminal type based on the information indicated from base station 100.

In the present embodiment, base station 100 may flexibly switch the PRACH configurations (for example, combinations of PRACH configurations) according to information (or conditions) related to the cell situation, such as the number of terminals of each terminal type accessing the cell, different use cases, or time periods.

For example, any one of a plurality of candidates (for example, Plurality 1 and Plurality 2 described above) for the information on the combination of the PRACH configurations may be indicated to terminal 200 according to a certain condition (or situation). For example, base station 100 may indicate, to terminal 200, the combination (Plurality 1) of the PRACH configurations as in exemplary operation 2-1 in a certain situation, and may indicate, to terminal 200, the combination (Plurality 2) of the PRACH configurations as in exemplary operation 2-2 in another situation.

For example, in a case where the number of RedCap terminals accessing the cell is significantly larger than the number of eRedCap terminals (for example, in a case where a difference between the number of RedCap terminals and the number of eRedCap terminals is equal to or greater than a threshold value), base station 100 may indicate, to terminal 200, the PRACH configurations as in exemplary operation 2-1. As a result, the RedCap terminal can appropriately transmit the preamble based on the PRACH configurations different from that for the non-RedCap terminal.

In addition, for example, in a case where the number of eRedCap terminals accessing the cell is significantly larger than the number of RedCap terminals (for example, in a case where a difference between the number of eRedCap terminals and the number of RedCap terminals is equal to or greater than a threshold value), base station 100 may indicate, to terminal 200, the PRACH configurations as in exemplary operation 2-2. As a result, the eRedCap terminal can appropriately transmit the preamble based on the PRACH configurations that can be used only by the eRedCap terminal.

As described above, base station 100 can indicate an optimal PRACH configuration according to the cell situation. In addition, terminal 200 may flexibly switch the PRACH configurations to be used, for example, according to the indication from base station 100.

The embodiments of the present disclosure have been described, thus far.

### (Other Embodiments)

### [Example of PRACH Configuration]

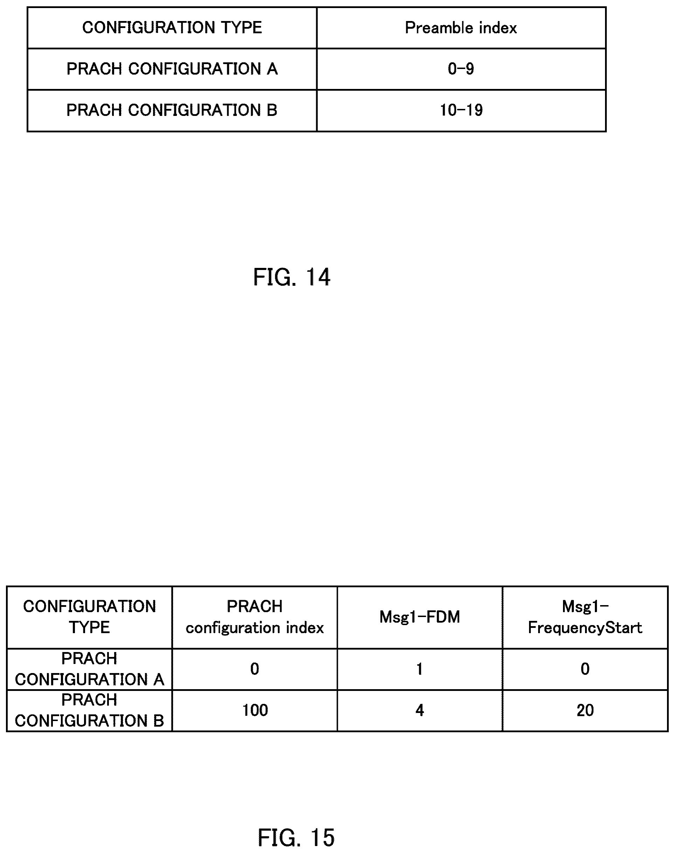

In each of the above-described embodiments, different preamble indices may be configured in the plurality of PRACH configurations included in the combination of the PRACH configurations. For example, as shown in FIG. 14, preamble indices 0 to 9 may be configured in PRACH configuration A included in the combination of the PRACH configurations, and preamble indices 10 to 19 may be configured in PRACH configuration B. The values and the number of the preamble indices configured in each PRACH configuration (configuration type) are examples and are not limited thereto.

In addition, an indication method for the preamble index may be, for example, a method in which the value of the preamble index itself is indicated, or a method in which at least one of the minimum value (for example, 0 in PRACH configuration A and 10 in PRACH configuration B in FIG. 14) among the plurality of preamble indices included in the PRACH configurations and the number of preamble indices included in the PRACH configuration (for example, 10 in the example of FIG. 14) is indicated.

In addition, the number of preambles included in each PRACH configuration may be the same or different between the PRACH configurations. For example, the number of preambles included in each PRACH configuration may be determined according to the cell situation. For example, the PRACH configuration for a terminal type of a larger number of terminals among the non-RedCap terminal, the RedCap terminal, and the eRedCap terminal that access the cell may include a larger number of preambles than the PRACH configurations for other terminal types. For example, in a case where the number of eRedCap terminals accessing the cell is larger than the number of non-RedCap terminals and RedCap terminals, the PRACH configuration for eRedCap terminal may include a larger number of preambles than the PRACH configurations for non-RedCap terminal and RedCap terminal.

In addition, in each of the above-described embodiments, for the plurality of PRACH configurations included in the combination of the PRACH configurations, the PRACH occasion (also referred to as PRACH transmission occasion; e.g., the time/frequency resource) may be different between the PRACH configurations. For example, as shown in FIG. 15, the time/frequency resources may be configured for each configuration type (for example, PRACH configuration A and PRACH configuration B) included in the combination of the PRACH configurations. Here, the "PRACH configuration index" may be a parameter representing a time resource of the PRACH occasion or the like, and "Msg1-FDM" (for example, the number of frequency-multiplexed PRACH occasions) and "Msg1-FrequencyStart" (for example, an offset of the PRACH occasion in a frequency domain) may be parameters representing a frequency resource of the PRACH occasion or the like. The parameters related to the PRACH occasion and the configured values of the parameters are not limited to the parameters shown in FIG. 15, and may be other parameters or other configured values.

In addition, the sizes of the time/frequency resources of the PRACH occasion included in each PRACH configuration may be the same or different between the PRACH configurations. For example, the size of the time/frequency resource of the PRACH occasion may be determined according to the cell situation. For example, the PRACH configurations for a terminal type of a larger number of terminals among the non-RedCap terminal, the RedCap terminal, and the eRedCap terminal that access the cell may include a PRACH occasion resource having a larger size than the PRACH configurations for other terminal types. For example, in a case where the number of eRedCap terminals accessing the cell is larger than the number of non-RedCap terminals and RedCap terminals, the PRACH configurations for eRedCap terminal may include a PRACH occasion resource having a larger size than the PRACH configurations for non-RedCap terminal and RedCap terminal.

### [Variation of Combination of PRACH Configuration]

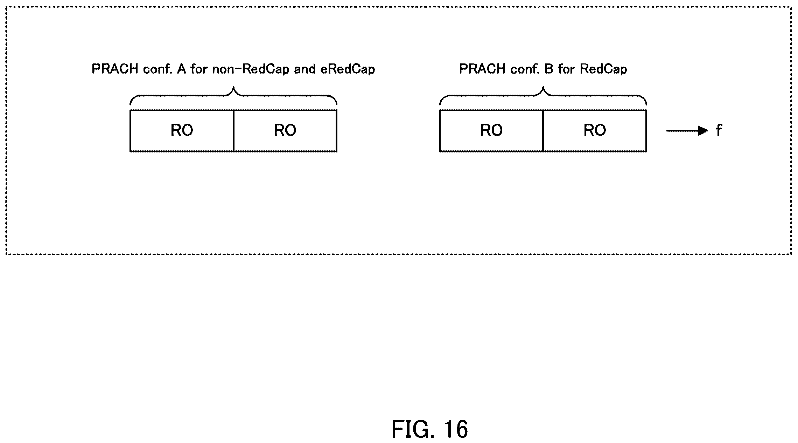

The relationship between the PRACH configuration included in the combination of the PRACH configurations and the terminal type shown in each of the above-described embodiments is merely an example, and another relationship may be applied. For example, as shown in FIG. 16, a relationship may be such that PRACH configuration A is used by the non-RedCap terminal and the eRedCap terminal, and PRACH configuration B is used by the RedCap terminal. In addition, the relationship between the PRACH configurations and the terminal type may be any other combination.

In addition, as the combination of the PRACH configurations, a combination of the PRACH configuration (for example, PRACH configuration Y in FIG. 7) that is decodable for the RedCap terminal and the eRedCap terminal and the PRACH configuration (for example, PRACH configuration Z in FIG. 8) that is decodable for the eRedCap terminal may be included.

In addition, in the above-described embodiment, an example has been described in which the number of PRACH configurations included in the combination of the PRACH configurations is two, but the number of PRACH configurations included in the combination of the PRACH configurations is not limited to two, and may be one or three or more. Similarly, in the above-described embodiment, an example has been described in which there are three types of terminal types, that is, the non-RedCap terminal, the RedCap terminal, and the eRedCap terminal, but the number of terminal types is not limited to three, and may be two or four or more.

### [Relationship with BWP]

The frequency resource of the PRACH configurations in each of the above-described exemplary embodiments may be included in a frequency resource (band) occupied by a bandwidth part (BWP) for the RedCap terminal, a BWP for the eRedCap terminal, or a BWP common to all terminals (or a BWP that is not particularly determined for the RedCap terminal or the like).

In addition, the frequency resources of the PRACH configurations in the combination of the PRACH configurations may be included respectively in, for example, bands of BWPs different from each other. For example, the frequency resource of one PRACH configuration may be included in the band of the BWP for RedCap, and the frequency resource of the other PRACH configuration may be included in the band of the BWP for eRedCap.

In addition, for example, in a case where terminal 200 is indicated that PRACH configuration A is the PRACH configuration for the non-RedCap terminal and PRACH configuration B is the PRACH configuration for the RedCap terminal and the eRedCap terminal, the frequency resource of PRACH configuration A may be included in the band of the BWP common to all terminals (or all terminal types). On the other hand, the frequency resource of PRACH configuration B may be included in, for example, a band of at least one of the BWP for RedCap or the BWP for eRedCap.

In addition, for example, in a case where terminal 200 is indicated that PRACH configuration A is the PRACH configuration for the non-RedCap terminal and the RedCap terminal and PRACH configuration B is the PRACH configuration for the eRedCap terminal, the frequency resource of PRACH configuration A may be included in the band of the BWP common to all terminals (or all terminal types) or the BWP for RedCap. On the other hand, the frequency resource of PRACH configuration B may be included in the band of the BWP for RedCap or the BWP for eRedCap.

Alternatively, all the PRACH configurations may be included in the band of the same BWP.

### [Regarding Selection of PRACH Configuration]

In the above-described embodiment, a case has been described in which terminal 200 selects the PRACH configuration according to the terminal type corresponding to each PRACH configuration intended by base station 100, but the present disclosure is not limited to this. For example, terminal 200 may select the PRACH configuration different from the intention of base station 100 and transmit the preamble.

For example, in a case where base station 100 configures PRACH configuration A for the non-RedCap terminal or the RedCap terminal and configures PRACH configuration B for the eRedCap terminal, the eRedCap terminal may transmit the preamble by using PRACH configuration A instead of PRACH configuration B. As a result, flexible preamble transmission by terminal 200 is enabled.

As an example, the following cases can be assumed.

For example, there is a possibility that an "eRedCap PR1-standalone" terminal is introduced as one type of the above-described eRedCap terminal. As a feature of the eRedCap PR1-standalone terminal, it is assumed that the number of PRBs used for transmission/reception of the PDSCH or the PUSCH is equivalent to a maximum of 20 MHz (for example, equivalent to that of the RedCap terminal), and other functions (for example, the number of modulation order or the number of MIMO layers) are significantly limited (for example, configured (or limited) to a value lower than that of the RedCap terminal). For example, in a case where base station 100 configures PRACH configuration A for the non-RedCap terminal or the RedCap terminal and configures PRACH configuration B for the eRedCap terminal, the eRedCap PR1-standalone terminal may transmit the preamble by using PRACH configuration A instead of PRACH configuration B. As a result, base station 100 can perform appropriate PDSCH/PUSCH scheduling for the eRedCap PR1-standalone terminal capable of transmission/reception with the PRB equivalent to 20 MHz.

The "PR1-standalone" is an example of a name and may be another name.

In addition, in the above-described embodiment, with respect to the combination of the plurality of PRACH configurations, a case has been described in which the PRACH configuration is selected (or classified) according to the terminal type, but the present disclosure is not limited to this, and, for example, the PRACH configuration may be selected according to the bandwidth (or the number of PRBs) that can be used by terminal 200. As a result, base station 100 can perform appropriate PDSCH/PUSCH scheduling according to the bandwidth that can be used by each terminal 200.

### [Indication Method for PRACH Configuration]

In the above-described embodiment, an example in which SI is used as a method for indicating the PRACH configurations has been described. The SI used for indicating the PRACH configurations may be, for example, System Information Block 1 (SIB1) or other SIBs. In addition, the signal or the information used for indicating the PRACH configurations is not limited to the SI. For example, other signals such as a higher-layer signal, a radio resource control (RRC) signal, a master information block (MIB), a media access control (MAC), and downlink control information (DCI) may be used.

For example, the information on the plurality of PRACH configurations in Embodiment 2 and the information on the relationship between each PRACH configuration and the terminal type may be indicated to terminal 200 by the same signal or may be separately indicated by different signals. For example, the information on the plurality of PRACH configurations may be indicated to terminal 200 by the SI, and the information on the relationship between each PRACH configuration and the terminal type may be indicated to terminal 200 by the DCI.

In addition, even in a case where base station 100 indicates, to terminal 200, access prohibition of the RedCap terminal by using a signal such as SIB, base station 100 may indicate, to terminal 200, the PRACH configuration for the RedCap terminal. For example, even in a case where the access prohibition of the RedCap terminal is indicated, the above-described eRedCap PR1-standalone terminal may transmit the preamble by using the PRACH configuration for the RedCap terminal.

### [Type, Kind, and Identification of Terminal]

The above-described embodiment may be applied to, for example, "eRedCap terminal (including the above-described eRedCap PR1-standalone terminal)," "RedCap terminal," or "non-RedCap terminal" and may be applied even in a situation in which a terminal of another terminal type accesses the cell. For example, the same operation as that in the above-described embodiment may be applied in a situation in which a terminal (for example, an Ambient IoT terminal) that is batteryless or has a very small battery capacity accesses the cell, where standardization after Release 19 NR (hereinafter, also referred to as Rel-19) is expected. In this case, the Ambient IoT terminal may transmit the preamble by using, for example, a PRACH configuration different from the PRACH configurations used by the non-RedCap terminal, the RedCap terminal, and the eRedCap terminal, or may transmit the preamble by using the same PRACH configurations as any of the terminal types.

In the above-described embodiment, the features of the RedCap terminal and the eRedCap terminal (for example, characteristics, attributes, or capabilities) have been described as the supported maximum frequency allocation size (for example, the frequency bandwidth or the number of PRBs that can be used for PDSCH or PUSCH transmission) that is equal to or less than a threshold value, but the RedCap terminal and the eRedCap terminal may be, for example, terminals having at least one of the following features.
(1) A terminal that indicates (e.g., reports) to base station 100 that the terminal is a "RedCap terminal," an "eRedCap terminal," a "terminal targeted for coverage enhancement," or a "terminal that receives a repeatedly transmitted signal." Note that, for the above-described indication (report), an uplink channel such as a PRACH and a PUSCH or an uplink signal such as a Sounding Reference Signal (SRS) may be used, for example.
(2) A terminal having at least one of the following features or capabilities, or a terminal reporting at least one of the following capabilities to base station 100. Note that, for the above-described report, an uplink channel such as a PRACH or PUSCH or an uplink signal such as a UCI or SRS may be used, for example.
   - A terminal for which the transmittable and receivable frequency bandwidth (e.g., maximum value) is equal to or less than a threshold value (for example, 20 MHz or 5 MHz).
   - A terminal for which the number of transmittable and receivable PRBs (e.g., maximum number) is equal to or less than a threshold value (for example, 106 or less, 51 or less, 25 or less, or 11 or less).
   - A terminal for which the number of implemented reception antennae is equal to or less than a threshold value (e.g., threshold = 1)
   - A terminal for which the number of supportable downlink ports (e.g., the number of reception antenna ports) is equal to or less than a threshold value (e.g., threshold value = 2)
   - A terminal for which the number of supportable transmission ranks (e.g., the number of maximum Multiple-Input Multiple-Output (MIMO) layers (or the number of ranks)) is equal to or less than a threshold value (e.g., threshold value = 2)
   - A terminal capable of transmitting and receiving a signal in a frequency band equal to or less than a threshold value (e.g., Frequency Range 1 (FR1) or a band equal to or less than 6 GHz)
   - A terminal for which the processing time is equal to or longer than a threshold value
   - A terminal for which the available transport block size (TBS) is equal to or smaller than a threshold value
   - A terminal for which the number of available transmission ranks (e.g., the number of MIMO transmission layers) is equal to or less than a threshold value.
   - A terminal for which the available modulation order is equal to or less than a threshold value
   - A terminal for which the number of available Hybrid Automatic Repeat reQuest (HARQ) processes is equal to or less than a threshold value.
   - A terminal that supports Rel-17 or later in a case of being a RedCap terminal, and that supports Rel-18 or later in a case of being an eRedCap terminal.
(3) A terminal for which a parameter corresponding to the RedCap terminal or the eRedCap terminal is indicated from base station 100. The parameter corresponding to the RedCap terminal or the eRedCap terminal may include, for example, a parameter such as a subscriber profile ID for RAT/frequency priority (SPID).

The "non-eRedCap terminal" may mean, for example, a terminal that supports Rel-15/16/17 (for example, a terminal that does not support Rel-18) or a terminal that supports Rel-18 or later but does not have the above-described features.

### (Supplementary Note)

Information indicating whether terminal 200 supports the functions, operations, or processes described in the above-described embodiments may be transmitted (or indicated) from terminal 200 to base station 100 as capability information or a capability parameter of terminal 200.

The capability information may include an information element (IE) individually indicating whether terminal 200 supports at least one of the functions, operations, or processes described in the above-described embodiments. Alternatively, the capability information may include information elements that indicate whether terminal 200 supports a combination of any two or more of the functions, operations, or pieces of processing that have been described in the above-mentioned embodiments, variations, and supplementary notes.

Base station 100 may determine (or assume) the function, operation, or process supported (or not supported) by terminal 200 of the transmission source of the capability information, based on the capability information received from terminal 200, for example. Base station 100 may execute operations, processes, or control in accordance with a determination result based on the capability information. For example, base station 100 may control a PRACH configuration to be assigned for the terminal based on the capability information received from terminal 200.

Note that the fact that terminal 200 does not support some of the functions, operations, or processes described in the above-described embodiments may be read as that some of the functions, operations, or processes are limited in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) relating to the exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or Radio Resource Control (RRC) in a higher layer. Further, the signal (or information) is not limited to that notified by the downlink control signal, but may be predefined in the specifications (or standard) or may be pre-configured for the base station and the terminal.

Furthermore, the PDCCH may be transmitted, for example, in either Common Search Space (CSS) or UE Specific Search Space (USS).

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in sidelink communication, a terminal may play a role of a base station. Furthermore, instead of the base station, a relay apparatus that relays communication between a higher node and a terminal may be used. Moreover, a road side device may be used.

### (Uplink/Downlink/Sidelink)

An exemplary embodiment of the present disclosure may be applied to, for example, any of an uplink, a downlink, and a sidelink. For example, an exemplary embodiment of the present disclosure may be applied to an uplink Physical Uplink Shared Channel (PUSCH), Physical Uplink Control Channel (PUCCH), or Physical Random Access Channel (PRACH), a downlink Physical Downlink Shared Channel (PDSCH), PDCCH, or Physical Broadcast Channel (PBCH), or a sidelink Physical Sidelink Shared Channel (PSSCH), Physical Sidelink Control Channel (PSCCH), or Physical Sidelink Broadcast Channel (PSBCH).

For example, in the above-described embodiment, the configuration of the PRACH, which is the uplink, has been described as an example, but one exemplary embodiment of the present disclosure can also be applied to indication of the configuration of another uplink (for example, PUSCH or PUCCH). For example, the PRACH in the above-described embodiment may be a PUSCH or a PUCCH. Alternatively, one exemplary embodiment of the present disclosure can also be applied to indication of a configuration of a downlink (for example, PDCCH, PDSCH, or PBCH). For example, the PRACH in the above-described embodiment may be a PDCCH, a PDSCH, or a PBCH.

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and PSBCH are examples of broadcast channels, and the PRACH is an example of a random access channel.

### (Data Channels/Control Channels)

An exemplary embodiment of the present disclosure may be applied to, for example, any of a data channel and a control channel. For example, a channel in an exemplary embodiment of the present disclosure may be replaced with any one of the PDSCH, the PUSCH, and the PSSCH being the data channels, or the PDCCH, the PUCCH, the PBCH, the PSCCH, and the PSBCH being the control channels.

### (Reference Signals)

In one exemplary embodiment of the present disclosure, a reference signal is a signal known to both of a base station and a terminal, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS). For example, the PRACH in the above-described embodiment may be any of the reference signals.

### (Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

One exemplary embodiment of the present disclosure may be applied to any of a licensed band or an unlicensed band (unlicensed spectrum, shared spectrum). In a case of an unlicensed band, a channel access procedure (Listen Before Talk (LBT), carrier sense, and/or Channel Clear Assessment (CCA)) may be performed prior to transmission of each signal.

### (Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the PDCCH in one exemplary embodiment of the present disclosure may be replaced with PSCCH, the PUSCH/PDSCH may be replaced with PSSCH, the PUCCH may be replaced with Physical Sidelink Feedback Channel (PSFCH), and the PBCH may be replaced with PSBCH. In addition, the PRACH in the above-described embodiment may be a PSCCH, a PSSCH, or a PSFCH.

Further, one exemplary embodiment of the present disclosure may be applied to any of a terrestrial network or a network (Non-Terrestrial Network (NTN)) other than a terrestrial network using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

### (Full duplex and SBFD symbol)

One exemplary embodiment of the present disclosure may be applied to a symbol (for example, an SBFD symbol) in which an operation or control of subband non-overlapping full duplex (SBFD) is performed. In the SBFD symbol, frequency resources (or frequency bands) are divided into a plurality of bands (for example, also referred to as subbands, RB sets, sub-bands, or sub-bandwidth parts (BWPs)), and support transmission in different directions (for example, downlink or uplink) in units of subbands. In the SBFD symbol, the terminal may perform transmission and reception of only one of the uplink or the downlink and may not perform transmission and reception of the other. Meanwhile, in the SBFD symbol, the base station can simultaneously transmit and receive the uplink and the downlink. In the SBFD symbol, the number of frequency resources that can be used for the downlink may be smaller than that in a symbol in which only the downlink is transmitted and received. In addition, in the SBFD symbol, the number of frequency resources that can be used for the uplink may be smaller than that in a symbol in which only the uplink is transmitted and received.

In addition, in the SBFD symbol, the terminal may simultaneously transmit and receive the uplink and the downlink. In this case, the frequency resource transmitted by the terminal and the frequency resource received by the terminal may be separated by a frequency interval (also referred to as a frequency gap) without being adjacent to each other.

In addition, a sidelink may be included as the different directions in units of subbands in SBFD.

An embodiment of the present disclosure may be applied to a symbol (for example, a full duplex symbol) in which an operation or control of full duplex is performed. In the full duplex symbol, both the terminal and the base station can simultaneously transmit and receive the uplink and the downlink. However, for example, to reduce interference, only one of the terminal and the base station may support simultaneous transmission and reception, while the other may support only transmission or only reception. In the full duplex symbol, an operation may be performed in which the terminal and the base station simultaneously transmit and receive in all available frequency resources (or frequency bands), or an operation may be performed in which the terminal and the base station simultaneously transmit and receive only in some frequency resources (or frequency bands) (that is, an operation may be performed in which the terminal and the base station only transmit or receive in the other frequency resources).

### (Antenna Port)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

The 3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

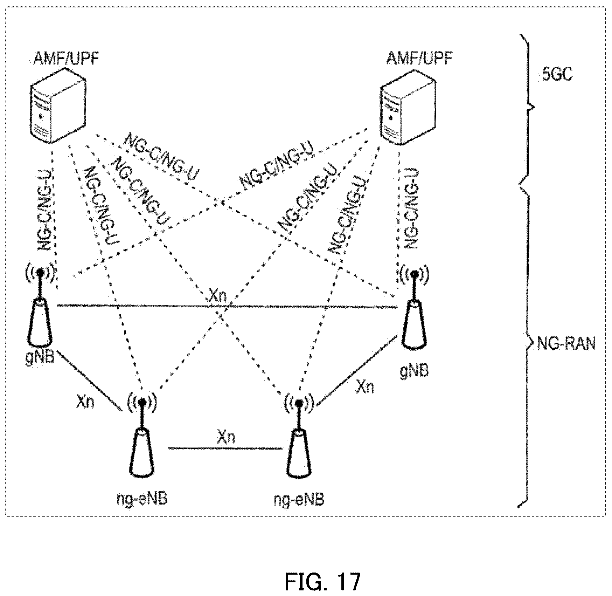

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 17 (see e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, the mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz, ... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

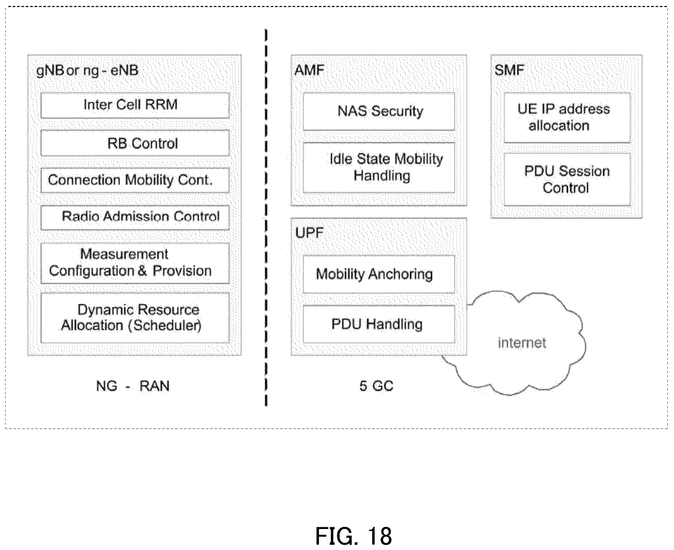

FIG. 18 illustrates functional split between NG-RAN and 5GC. A logical node of the NG-RAN is gNB or ng-eNB. The 5GC includes logical nodes AMF, UPF, and SMF.

For example, gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Function of Non-Access Stratum (NAS) signaling termination;
- NAS signaling security;
- Access Stratum, AS, Security control;
- Inter-Core Network (CN) node signaling for mobility between 3GPP access networks;
- Idle mode UE Reachability (including control and execution of paging retransmission);
- Registration area management;
- Support of intra-system and inter-system mobility;
- Access Authentication;
- Access Authorization including check of roaming rights;
- Mobility management control (subscription and policies);
- Support of Network Slicing;
- Session Management Function (SMF) selection

In addition, the User Plane Function (UPF) hosts the following main functions:
- Anchor point for Intra-/Inter-RAT mobility (when applicable);
- External Protocol Data Unit (PDU) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data indication triggering.

Finally, the Session Management Function (SMF) hosts the following main functions:
- Session Management;
- UE IP address allocation and management;
- Selection and control of UP function;
- Configuration function for traffic steering at the User Plane Function (UPF) to route traffic to a proper destination;
- Control part of policy enforcement and QoS; and
- Downlink data indication.

### <RRC Connection Setup and Reconfiguration Procedure>

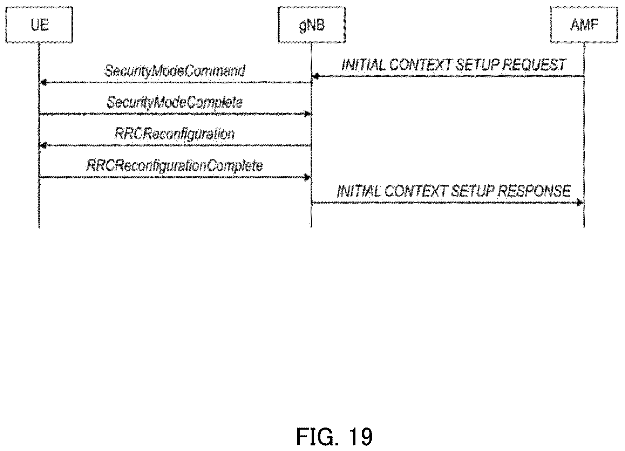

FIG. 19 illustrates some interactions between a UE, gNB, and AMF (a 5GC entity) in the context of a transition of the UE from RRC_IDLE to RRC_CONNECTED for the NAS part (see TS 38.300 v15.6.0).

RRC is higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB using the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

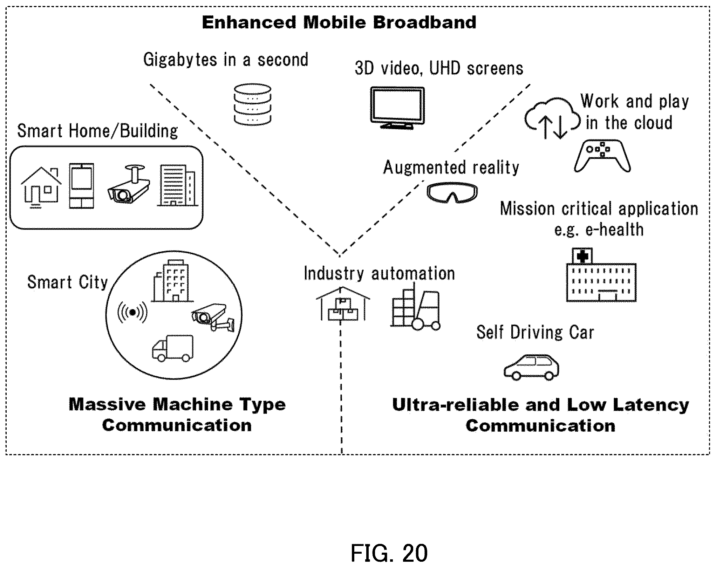

FIG. 20 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 20 illustrates some examples of envisioned usage scenarios for IMT for 2020 and beyond (see, e.g., ITU-R M. 2083 FIG. 2).

The URLLC use case has stringent requirements for capabilities such as throughput, latency and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few µs where the value can be one or a few µs depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU session, e.g., as illustrated above with reference to FIG. 19. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

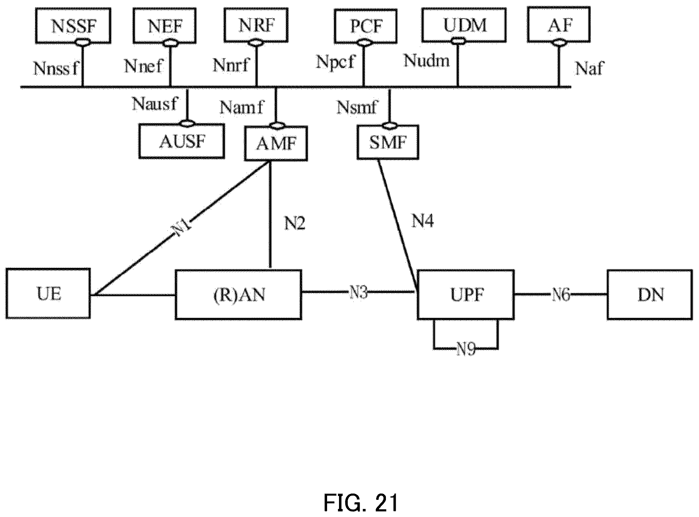

FIG. 21 illustrates a 5G NR non-roaming reference architecture (see TS 23.501 v16.1.0, section 4.23). An Application Function (AF) (e.g., an external application server hosting 5G services, exemplarily described in FIG. 20) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 21 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture), is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

Any component termed with a suffix, such as "-er," "-or," or "-ar" in the above-described embodiments may be replaced with other terms such as "circuit (circuitry)," "device," "unit," or "module."

Further, in the above-described embodiment, the values of parameters such as the number of RBs, a frequency bandwidth, and SCS are exemplary and may be other values.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to a non-limiting and exemplary embodiment of the present disclosure includes: reception circuitry, which, in operation, receives information on a second number of configurations of a random access signal for a terminal of a first number of types, the second number being less than the first number; and transmission circuitry, which, in operation, transmits the random access signal based on the information.

In the non-limiting and exemplary embodiment of the present disclosure, the terminal of the first number of types includes a terminal of a first type, a terminal of a second type, and a terminal of a third type, and the second number of configurations include: a first configuration that is indicated by first information identifiable by the terminal of the first type, the terminal of the second type, and the terminal of the third type, and any one of a second configuration that is indicated by second information identifiable by the terminal of the second type and the terminal of the third type and a third configuration that is indicated by third information identifiable by the terminal of the third type.

In the non-limiting and exemplary embodiment of the present disclosure, the terminal of the third type preferentially selects the second configuration over the first configuration, and preferentially selects the third configuration over the second configuration.

In the non-limiting and exemplary embodiment of the present disclosure, the terminal of the second type preferentially selects the second configuration over the first configuration.

In the non-limiting and exemplary embodiment of the present disclosure, either a combination of the first configuration and the second configuration or a combination of the first configuration and the third configuration is indicated to the terminal depending on a certain condition.

In the non-limiting and exemplary embodiment of the present disclosure, the information includes information indicating the second number of configurations, and information indicating an association between each of the second number of configurations and the first number of types.

A base station according to a non-limiting and exemplary embodiment of the present disclosure includes: transmission circuitry, which, in operation, transmits information on a second number of configurations of a random access signal for a terminal of a first number of types, the second number being less than the first number; and reception circuitry, which, in operation, receives the random access signal based on the information.

A communication method for a terminal according to a non-limiting and exemplary embodiment of the present disclosure includes: receiving information on a second number of configurations of a random access signal for a terminal of a first number of types, the second number being less than the first number; and transmitting the random access signal based on the information.

A communication method for a base station according to a non-limiting and exemplary embodiment of the present disclosure includes: transmitting information on a second number of configurations of a random access signal for a terminal of a first number of types, the second number being less than the first number; and receiving the random access signal based on the information.

The disclosure of Japanese Patent Application No. 2023-019121, filed on February 10, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 206 Controller
102 DCI Generator
103 Higher-layer signal generator
104, 208 Encoder/modulator
105, 209 Signal mapper
106, 210 Transmitter
107, 201 Antenna
108, 202 Receiver
109, 203 Signal separator
110, 205 Demodulator/decoder
200 Terminal
204 DCI detector
207 Preamble generator

## Claims

1. A terminal, comprising:
reception circuitry, which, in operation, receives information on a second number of configurations of a random access signal for a terminal of a first number of types, the second number being less than the first number; and
transmission circuitry, which, in operation, transmits the random access signal based on the information.

2. The terminal according to claim 1, wherein:
the terminal of the first number of types includes a terminal of a first type, a terminal of a second type, and a terminal of a third type, and
the second number of configurations include:
a first configuration that is indicated by first information identifiable by the terminal of the first type, the terminal of the second type, and the terminal of the third type, and
any one of a second configuration that is indicated by second information identifiable by the terminal of the second type and the terminal of the third type and a third configuration that is indicated by third information identifiable by the terminal of the third type.

3. The terminal according to claim 2, wherein
the terminal of the third type preferentially selects the second configuration over the first configuration, and preferentially selects the third configuration over the second configuration.

4. The terminal according to claim 2, wherein
the terminal of the second type preferentially selects the second configuration over the first configuration.

5. The terminal according to claim 2, wherein
either a combination of the first configuration and the second configuration or a combination of the first configuration and the third configuration is indicated to the terminal depending on a certain condition.

6. The terminal according to claim 1, wherein
the information includes information indicating the second number of configurations, and information indicating an association between each of the second number of configurations and the first number of types.

7. A base station, comprising:
transmission circuitry, which, in operation, transmits information on a second number of configurations of a random access signal for a terminal of a first number of types, the second number being less than the first number; and
reception circuitry, which, in operation, receives the random access signal based on the information.

8. A communication method for a terminal, comprising:
receiving information on a second number of configurations of a random access signal for a terminal of a first number of types, the second number being less than the first number; and
transmitting the random access signal based on the information.

9. A communication method for a base station, comprising:
transmitting information on a second number of configurations of a random access signal for a terminal of a first number of types, the second number being less than the first number; and
receiving the random access signal based on the information.
